# EUROPEAN PATENT SPECIFICATION

(11) **EP 0 790 694 B1**
(45) Date of publication and mention of the grant of the patent: **29.08.2001**
(21) Application number: 97201208.2
(22) Date of filing: 09.11.1993
(51) Int. Cl.: H02K 7/08, H02K 5/173

(54) **Integral bearing type electric motor**
Elektrischer Motor des Typs mit integriertem Lager
Moteur électrique du type à palier intégré

(30) Priority: 09.11.1992 JP 32364592
(43) Date of publication of application: 20.08.1997
(62) Divisional of application: 93308952.6
(73) Proprietor: MINEBEA KABUSHIKI-KAISHA, Kitasaku-gun, Nagano-ken (JP)
(72) Inventor: Obara, Rikuro, Miyota-cho, Kitasaku-gun, Nagano-ken (JP)
(74) Representative: Johnstone, Douglas Ian

(56) References cited:
- EP-A- 0 592 214
- WO-A-93/06600
- DE-A- 3 540 363
- FR-A- 2 565 017
- US-A- 4 733 120
- PATENT ABSTRACTS OF JAPAN vol. 16, no. 116 (E-1181), 24 March 1992 & JP 03 285546 A (NIPPON DENSAN CORP), 16 December 1991,

## Description

This invention relates to electric motors mainly applied to office automation (OA) apparatus.

Fig. 2 shows an electric motor, for instance a spindle motor. The motor comprises a spindle, a hub as rotor, a flange as base and a yoke holder. The spindle is supported in a ball bearing, which comprises an inner and an outer ring provided in a bearing sleeve. These components are provided as independent parts, and such components as the hub, flange, yoke holder, etc. are separate parts from the ball bearing.

Since the prior art motor comprises the hub, flange and yoke holder as separates parts from the ball bearing, it has a large number of components. Besides, in manufacture a step of assembling the components on the ball bearing is necessary.- The manufacture thus involves a large number of steps and leads to a high cost.

Further, since in the prior art structure the individual components are independent parts, it is not easy to provide accurate, raceway run-out or axial tolerance when assembling the individual components. Therefore, improvement of the raceway run-out can not be substantially expected.

Various bearing arrangements are described in patent EP-A-0 592 214 which was filed on 7/10/93 designating the contracting states Germany, France, Britain, Italy and the Netherlands. It claimed priority from two Japanese applications, one filed before the priority date of this patent (JP 293858/92, filed 7/10/92) and one filed on the same day as the priority date of this patent (JP 323646/92, filed 9/11/92) EP-A-0 592 214 thus forms part of the prior art in the meaning of Article 54(3) EPC insofar as its subject matter was disclosed in its earlier priority document. The earlier priority document discloses a compound bearing in which a motor hub is integral with a larger diameter portion of a stepped spindle. A row of balls is provided between an outer race formed in a larger diameter spindle portion and an inner race formed in a sleeve. An inner ring is fitted on the smaller diameter portion of the spindle and another row of balls is provided between an outer race formed in the inner ring and another inner race formed in the sleeve.

Patent US 4,713,704 discloses an integral bearing electric motor including a stepped spindle having a larger and a smaller diameter portion. The smaller diameter portion has an inner ring surrounding it and balls are provided between the inner ring and a sleeve surrounding the spindle and between the larger diameter portion of the spindle and the sleeve.

Patent JP-A-03 285 546 discloses a spindle motor with a straight spindle which is integral with a hub. Rotor magnets are mounted on the inside of the hub and face a stator yoke which is mounted on a sleeve. The spindle is supported by-two bearings.

An object of the invention is to provide an electric motor, particularly, a spindle motor, which comprises a reduced number of components and can reduce the steps of assembling to permit reduction of the cost of manufacture to be expected, as well as permitting improvement of the raceway run-out or axial tolerance.

Thus, according to the invention there is provided an integral bearing type electric motor comprising a stator, a rotor and a bearing assembly including a stepped spindle having a large and a small diameter portion, a sleeve surrounding said spindle, said spindle having a large diameter portion thereof formed with an outer ball race for one ball row, balls in said one row being provided between said outer ball race and an inner ball race formed in said sleeve, and an inner ring fitted on the small diameter portion of said spindle and having an outer ball race, balls in another ball row being provided between said outer ball race of said inner ring and a corresponding inner ball race formed in said sleeve wherein a hub constituting said rotor of said motor is integrally formed with said spindle, said stator includes a stator yoke with a coil, said rotor includes a magnet mounted on said hub so as to face said stator yoke, and wherein said stator yoke is mounted on an inwardly facing surface of an outer peripheral portion of a yoke holder, and said magnet is mounted on an outwardly facing surface of a cylindrical magnet holder which is integrally formed with said hub.

A preferred embodiment of an electric motor using a composite bearing according to the invention will now be described by way of example with reference to the accompanying drawings, in which:
Fig. 1 is a section view showing the embodiment of the invention; and
Fig 2 is a sectional view showing a prior art spindle motor.

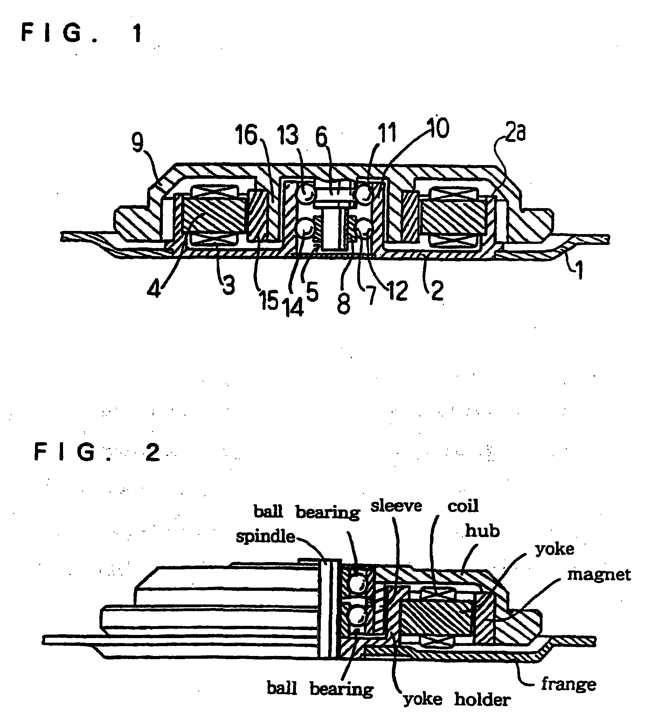

Fig. 1 shows an outer rotor type spindle motor according to the invention

In the electric motor shown in Fig. 1, a stator yoke holder 2 has an outer flange 1. The stator yoke holder 2 and sleeve 10 of the ball bearing body are integral with each other, and a spindle 5 and hub 9 are integral with each other. A stator yoke 4 with a coil 3 is provided in the inner periphery of a rib 2a of the stator yoke holder 2, and a permanent magnet 15 for forming a magnetic field flux is provided on the outer periphery of a cylindrical magnet holder 16, which is formed by molding such that it is integral with the center of the underside of the hub 9. The spindle is of two-step structure, having a larger diameter upper portion and a smaller diameter lower portion. The outer periphery of the larger diameter portion of the spindle is formed with a race 6, and an inner ring 8 with a race 7 is fitted on the smaller diameter portion of the spindle. The inner periphery of the sleeve 10 has juxtaposed races 11 and 12 respectively corresponding to the larger diameter portion race of the spindle and the race of the inner ring. Balls 13 and 14 are provided between opposed ones of the races. The sleeve 10, balls 13 and 14, inner ring 8 and race 6 of the larger diameter portion of the spindle form the ball bearing body, which supports the hub for rotation about the spindle.

The inner surface (top surface) of the flange is provided with a printed circuit board for motor driving in correspondence to the coil 3.

Thus, with a motor according to the invention, unlike the prior art bearing structure, in which the hub or flange or yoke holder is a separate part from the bearing body, assembling at the time of the manufacture can be readily effected. Efficient assembly can be achieved by using machines, and the cost of manufacture can be reduced, which is very beneficial in industrial production.

Further, since the yoke holder is preliminarily molded together with the sleeve, and the spindle with the hub, it is possible to provide a motor, which is free from axial play and has high raceway run-out or axial tolerance and which does not require any centering of the spindle with respect to the hub during its manufacture.

Further, the composite bearing has the advantage that during manufacture pre-loading can be readily effected by urging the inner ring in the axial direction.

## Claims

1. An integral bearing type electric motor comprising a stator (3,4), a rotor (9) and a bearing assembly (5,8,10) including a stepped spindle (5) having a large and a small diameter portion, a sleeve (10) surrounding said spindle (5), said spindle having a large diameter portion thereof formed with an outer ball race (6) for one ball row, balls (13) in said one row being provided between said outer ball race (6) and an inner ball race (11) formed in said sleeve (10), and an inner ring (8) fitted on the small diameter portion of said spindle (5) and having an outer ball race (7), balls (14) in another ball row being provided between said outer ball race (7) of said inner ring (8) and a corresponding inner ball race (12) formed in said sleeve (10) wherein a hub (9) constituting said rotor of said motor is integrally formed with said spindle (5), said stator (3, 4) includes a stator yoke (4) with a coil (3), said rotor includes a magnet (15) mounted on said hub (9) so as to face said stator yoke (4), and wherein said stator yoke (4) is mounted on an inwardly facing surface of an outer peripheral portion of a yoke holder (2), and said magnet (15) is mounted on an outwardly facing surface of a cylindrical magnet holder (16) which is integrally formed with said hub (9).

## Patentansprüche

1. Elektromotor mit reibungsloser Lagerung, umfassend einen Stator (3,4), einen Läufer (9) und eine Lagergruppe (5, 8, 10) mit einer abgestuften Spindel (5) mit einem Abschnitt mit großem Durchmesser und einem Abschnitt mit kleinem Durchmesser, eine Buchse (10), welche die Spindel (5) umgibt, wobei die Spindel einen Abschnitt mit großem Durchmesser aufweist, an dem ein äußerer Kugellagerring (6) für eine Kugelreihe ausgebildet ist, wobei Kugeln (13) in dieser einen Reihe zwischen dem äußeren Kugellagerring (6) und einem inneren Kugellagerring (11), der in der Buchse (10) ausgebildet ist, vorhanden sind, und einen Innenring (8), der am Abschnitt mit kleinem Durchmesser der Spindel (5) befestigt ist und einen äußeren Kugellagerring (7) aufweist, wobei Kugeln (14) in einer anderen Kugelreihe zwischen dem äußeren Kugellagerring (7) des Innenrings (8) und einem entsprechenden inneren Kugellagerring (12), der in der Buchse (10) ausgebildet ist, vorhanden sind, wobei eine Nabe (9), welche den Läufer des Motors darstellt, auf einstückige Weise mit der Spindel (5) ausgebildet ist, wobei der Stator (3, 4) ein Statorjoch (4) mit einer Spule (3) umfaßt, wobei der Läufer einen Magneten (15) umfaßt, der so an der Nabe (9) montiert ist, daß er zum Statorjoch (4) gerichtet ist, und wobei das Statorjoch (4) an der nach innen gerichteten Oberfläche eines äußeren umfänglichen Abschnitts der Jochhalterung (2) befestigt ist, und wobei der Magnet (15) an einer nach außen gerichteten Oberfläche eines zylindrischen Magnethalters (16) befestigt ist, der auf einstückige Weise an der Nabe (9) ausgebildet ist.

## Revendications

1. Moteur électrique du type à palier intégré comprenant un stator (3, 4), un rotor (9) et un ensemble (5, 8, 10) de palier incluant une broche (5) étagée à parties de grand et de petit diamètre, un manchon (10) entourant ladite broche (5), ladite broche comprenant une partie de grand diamètre sur laquelle est formée une piste extérieure (6) de billes pour une première rangée de billes, les billes (13) de la première rangée étant agencées entre ladite piste extérieure (6) de billes et une piste intérieure (11) de billes formée dans ledit manchon(10), et une bague intérieure (8) rapportée sur la partie de petit diamètre de ladite broche (5) et comportant une piste extérieure (7) de billes, les billes (14) de l'autre rangée de billes étant agencées entre ladite piste extérieure (7) de billes de ladite bague intérieure (8) et une piste intérieure associée (12) de billes formée dans ledit manchon (10), dans lequel un moyeu (9) qui constitue le rotor dudit moteur est formé d'un seul tenant avec la broche (5), ledit stator (3, 4) inclut une culasse (4) de stator pourvue d'une bobine (3), ledit rotor inclut un aimant (15) monté sur ledit moyeu (9) de façon à faire face à ladite culasse (4) de stator, et dans lequel ladite culasse (4) de stator est montée sur une surface, tournée vers l'intérieur, d'une partie périphérique extérieure d'un support (2) de culasse, et ledit aimant (15) est monté sur une surface, tournée vers l'extérieur, d'un support cylindrique (16) d'aimant qui est formé d'un seul tenant avec ledit moyeu (9).
